# EUROPÄISCHE PATENTSCHRIFT

(11) **EP 2 252 388 B1**
(45) Veröffentlichungstag und Bekanntmachung des Hinweises auf die Patenterteilung: **10.12.2014**
(21) Anmeldenummer: 09718028.5
(22) Anmeldetag: 23.02.2009
(51) Int. Cl.: B01D 63/08, B01D 65/00

(54) **FILTRATIONSVORRICHTUNG FÜR MIKRO-, ULTRA- UND NANOFILTRATION**
FILTRATION ARRANGEMENT FOR MICRO, ULTRA, AND NANOFILTRATION
DISPOSITIF DE FILTRATION POUR MICRO-, ULTRA- ET NANOFILTRATION

(30) Priorität: 03.03.2008 DE 102008012305
(43) Veröffentlichungstag der Anmeldung: 24.11.2010
(73) Patentinhaber: Microdyn-Nadir GmbH, 65203 Wiesbaden (DE)
(72) Erfinder: KIENE, Klaus, 55450 Langenlonsheim (DE); VOIGT, Reinhard, 99867 Gotha (DE); KRAUSE, Stefan, 64285 Darmstadt (DE)
(74) Vertreter: Plate, Jürgen
(86) Internationale Anmeldenummer: PCT/EP2009/001265
(87) Internationale Veröffentlichungsnummer: WO 2009/109308

(56) Entgegenhaltungen:
- WO-A-03/037489
- WO-A-2007/122839
- DE-A1-102006 022 502
- JP-A- 7 299 339
- JP-A- 2001 087 763
- JP-A- 2005 211 733

## Beschreibung

Die vorliegende Erfindung betrifft eine Filtrationsvorrichtung für Mikro-, Ultra- und Nanofiltration, die auf Flachfilterelementen basiert.

Herkömmliche Filtrationssysteme zur Abwasserreinigung bestehen aus Filtrationsmodulen mit einem rohr- oder kastenförmigen Gehäuse, in dem mehrere Flachfilterelemente parallel zueinander beabstandet angeordnet sind. Die Zwischenräume zwischen benachbarten Flachfilterelementen bilden durchströmbare Durchgänge. Eine zu filternde Flüssigkeit, als Rohflüssigkeit oder Retentat bezeichnet, wird über Zuleitungen oderdurch Öffnungen in den Gehäusewänden in das Innere des rohr- oder kastenförmigen Gehäuses geleitet, strömt über die Flachfilterelemente und fließt durch Ableitungen oder weitere Öffnungen in den Gehäusewänden ab. Die Flachfilterelemente sind als Kissen oder Kassetten ausgestaltet und umfassen eine flexible Drainageschicht oder starre Drainageplatte, die beidseitig von Filtrationsmembranen umgeben ist. Die Flachfilterelemente weisen Ablauföffnungen auf, an die Leitungen angeschlossen sind, durch welche gefilterte Flüssigkeit, im folgenden als Permeat bezeichnet, abgeführt wird.

EP 0 707 884 A1 offenbart eine Vorrichtung zum Filtern und Trennen von insbesondere biologisch organischen Strömungsmedien durch Umkehrosmose sowie Mikro-, Ultra- und Nanofiltration, mit einem druckdichten Gehäuse, mit einem Einlass für das Strömungsmedium und Auslässen für das Retentat sowie das Permeat und einer Anzahl im Gehäuse angeordneter, voneinander beabstandeter Filterelemente, die nach Art eines Membrankissens ausgebildet sind und die vom Strömungsmedium umflossen werden, wobei im Gehäuse eine Anzahl von gesonderten Stapeln von Membrankissen hinter- oder nebeneinander angeordnet ist und die Stapel hintereinander oder nebeneinander vom Strömungsmedium umflossen werden.

EP 0 129 663 A1 lehrt ein Membrankissen für Wasserentsalzung durch Umkehrosmose, Ultrafiltration, Hyperfiltration, Gaspermeation und dergleichen, bei dem eine Drainageschicht zwischen zwei äußeren Membranen angeordnet und die Drainageschicht mit den Membranen in einer Randzone durchgehend und druckdicht verschweißt ist.

WO 03/037489 A1 beschreibt ein Filtrationsmodul zur Reinigung von Abwasser mit mehreren, mindestens eine Öffnung zur Entwässerung ihres Innenraums aufweisenden Filtermembrantaschen, die vertikal, parallel und vorzugsweise in gleichem Abstand zueinander in einem starren Halter so angeordnet sind, dass die zwischen benachbarten Filtermembrantaschen liegenden Zwischenräume intensiv von einer Flüssigkeit durchströmbar sind. JP07299339 offenbart eine Filtrationsvorrichtung für die Wasseraufbereitung umfassend ein Flachfiltermodul und ein Untersatzgehäuse.

JP2005211733 offenbart ein Flachmembranmodul bei dem die Abdeckung aus einem Faser-Verbundwerkstoff hergestellt sein kann.
EP2011561 wird die Möglichkeit erwähnt, dass die Trägerplatte eines Flachmembranmoduls aus einem Faser-Verbundwerkstoff hergestellt wird.

Einige der bekannten Filtrationsmodule weisen ein kastenförmiqes Gehäuse auf, mit zwei oder vier, paarweise gegenüberliegend angeordneten Seitenwänden, die ein Raumvolumen mit rechteckigem Strömungsquerschnitt umgrenzen. In dem Gehäuse sind Flachfilterelemente derart montiert, dass sie einen Stapel bilden, der das vom Gehäuse umfasste Raumvolumen in mehrere gleichgroße Strömungskanäle unterteilt. Zur Aufnahme und Halterung der Flachfilterelemente dient z.B. eine Anzahl von paarweise und zueinander parallel angeordneten Nuten in zwei einander gegenüberliegend angeordneten Seitenwänden des Gehäuses. Randseitige Abschnitte der Flachfilterelemente sind mittels Klebeverbindungen oder mechanischen Halterungen in den Nuten fixiert.

Üblicherweise wird die Rohflüssigkeit mittels einer Pumpe in vertikaler Richtung von unten nach oben durch die Filtrationsmodule geführt. Insbesondere werden mit Luft betriebene Mammutpumpen (Druckluftheber) eingesetzt. Hierbei wird Druckluft von einem Kompressor über Druckluftleitungen unterhalb der Filtrationsmodule in die Rohflüssigkeit eingeleitet. Am Ort der Einleitung wird die Dichte der Rohflüssigkeit durch eingeleitete Luft stark reduziert und durch den Auftrieb bildet sich eine von unten nach oben gerichtete Strömung aus. Die Druckluftleitungen sind in der Regel mit einer Vielzahl von Auslassdüsen ausgestattet. Zweckmäßig sind die Auslassdüsen gleichmäßig in einer horizontalen Fläche derart angeordnet, dass die ausströmende Luft einen aufsteigenden Blasenteppich bildet, der den Strömungsquerschnitt der Filtrationsmodule teilweise oder gänzlich ausfüllt.

Im laufenden Betrieb eines Filtrationssystems werden Partikel, deren Durchmesser zu groß ist, um die Poren der Filtrationsmembran zu passieren, auf der Oberfläche der

Filtrationsmembranen zurückgehalten und bleiben teilweise haften. Durch Akkumulation solcher Partikel über einen längeren Zeiträume baut sich Filterkuchen auf, der die Membranoberflächen zunehmend verstopft und die Filtrationsleistung des Systems reduziert.

Um die Filtrationsleistung wieder herzustellen bzw. zu erhalten, werden die Membranoberflächen im Rahmen einer Anlagenwartung regelmäßig gereinigt. Hierzu wird die Membranoberfläche mechanisch, z.B. mittels Bürsten oder Wasserstrahl oder mittels Rückspülung gereinigt. Zum Teil werden begleitend zur mechanischen Reinigung auch chemische Reinigungsmittel eingesetzt (chemomechanische Reinigung).

Bei Montage und Wartung sowie während des Betriebs wirken auf die Filtrationsvorrichtung z.T. erhebliche mechanische Kräfte ein. Dies trifft insbesondere dann zu, wenn ein großes Filtrationsmodul mit einer Filtrationsfläche von mehr als 30 m² zwecks Wartung aus einer zu filternden Flüssigkeit angehoben wird. Die von den porösen Filtrationsmembranen aufgenommene und festgehaltene Flüssigkeit erhöht das Gewicht des Filtrationsmodul in beträchtlichem Maße. Bei einer Vielzahl von Anwendungen wie z.B. in Kläranlagen enthält die zu filternde Flüssigkeit zudem höher viskosen Schlamm, welcher an der Oberfläche der Flachfilterelemente haftet und bei der wartungsbedingten Anhebung der Filtrationsvorrichtung praktisch nicht abfließt. Dieser anhaftende Schlamm, der insbesondere bei dichtgepackten Flachfilterelementen die Zwischenräume nahezu vollständig ausfüllt, kann ein Gewicht von bis zu einigen hundert Kilogramm haben. Bei der wartungsbedingten Anhebung muß die tragende Konstruktion der Filtrationsvorrichtung somit einer Belastung von bis zu einer Tonne standhalten.

Um die hierfür erforderliche mechanische Stabilität bzw. Steifigkeit zu gewährleisten, sind die Seitenwände der Filtrationsvorrichtung mittels eines Rahmens oder Verstrebungen aus einem stabilen Werkstoff wie z.B. Stahl verstärkt und untereinander verbunden. Derartige Rahmenkonstruktionen sind in der Herstellung aufwendig und teuer und erhöhen zudem das Eigengewicht der Filtrationsvorrichtung.

Dementsprechend hat die vorliegende Erfindung die Aufgabe, eine Filtrationsvorrichtung zu schaffen, die eine besonders hohe Filtrationsdichte, d.h. große Filtrationsfläche, bezogen auf ihr Eigengewicht, in kompakter Bauweise bei zugleich hoher mechanischer Stabilität und geringem Eigengewicht aufweist.

Eine weitere Aufgabe der Erfindung besteht darin eine Filtrationsvorrichtung bereitzustellen, die konstruktiv einfach und kostengünstig herstellbar ist, geringen Strömungswiderstand und geringe Verstopfungsneigung aufweist und leicht zu warten und reparieren ist.

Diese Aufgabe wird gelöst durch eine Filtrationsvorrichtung, umfassend ein Flachfiltermodul und ein Untersatzgehäuse mit einer Wandung aus einem polymeren zellularem Leichtbauwerkstoff oder einem Faserverbundwerkstoff.

Die Erfindung wird im folgenden unter Bezugnahme auf die schematischen Darstellungen der Figuren näher beschrieben. Es zeigen:
- Fig. 1: eine Filtrationsvorrichtung mit Flachfiltermodul und Untersatzgehäuse in perspektivischer Explosionsansicht,
- Fig. 1a: im Detail die Aufhängung der Flachfilterelemente im Flachfiltermodul,
- Fig. 2: eine Filtrationsvorrichtung gemäß Fig. 1 mit teilweise geschnittenem Untersatzgehäuse und Flachfiltermodul, und

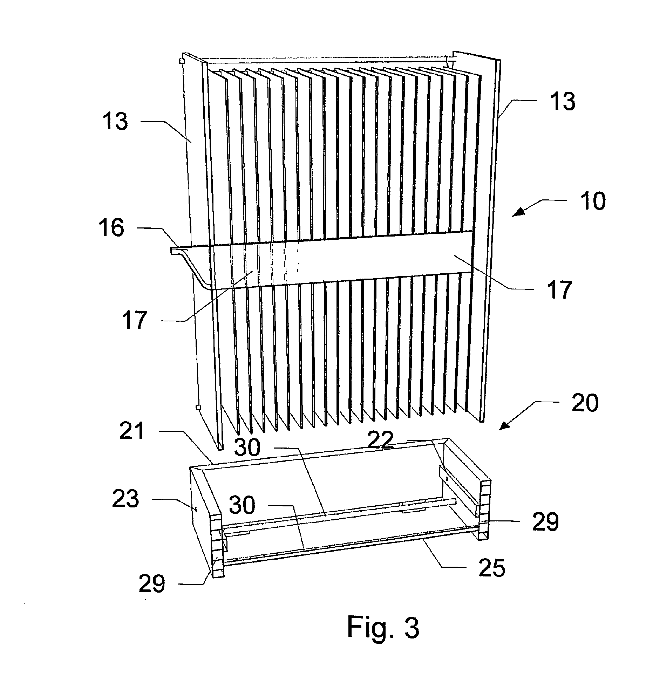

- Fig. 3: eine perspektivische Schnittansicht durch die Filtrationsvorrichtung nach Fig. 1.

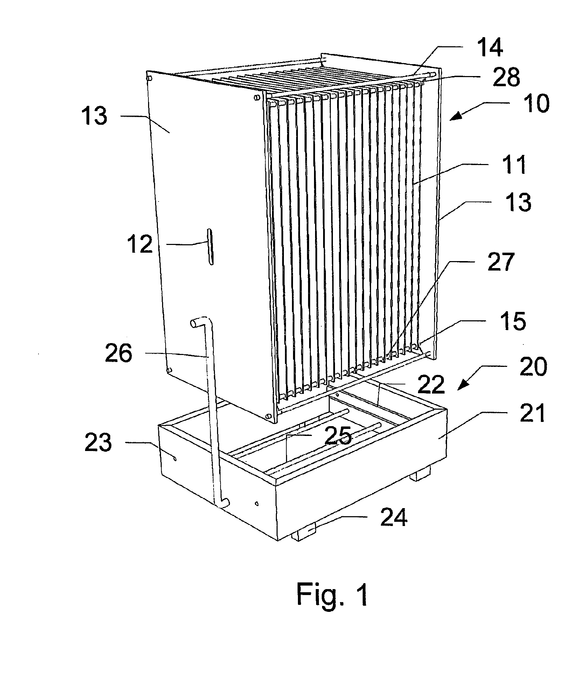

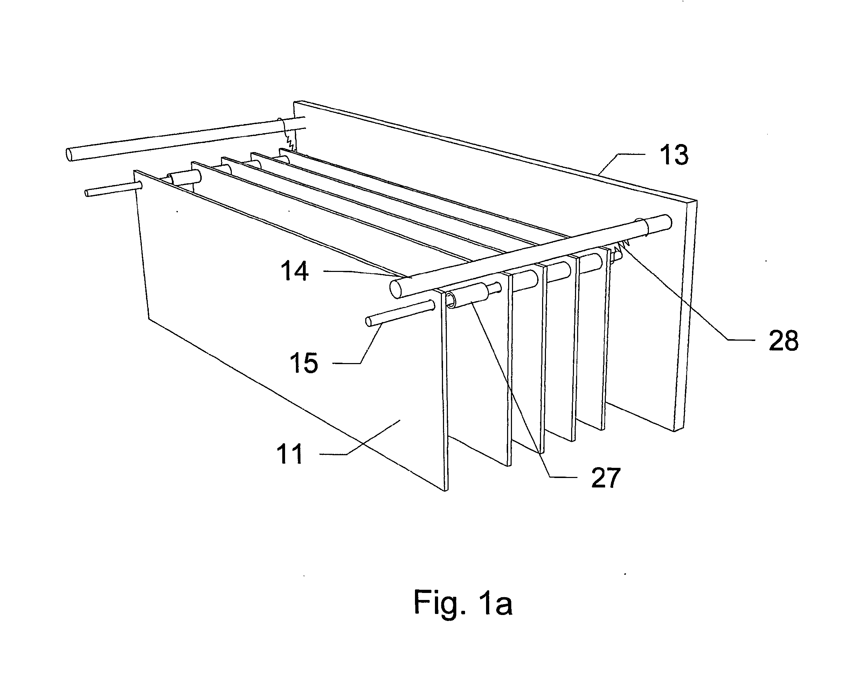

Fig. 1 zeigt in perspektivischer Ansicht eine Ausführungsform einer erfindungsgemäßen Filtrationsvorrichtung mit einem Flachfiltermodul 10 und einem Untersatzgehäuse 20. Das Flachfiltermodul 10 umfasst zumindest ein Filterflachelement oder mehrere parallel zueinander beabstandete Flachfilterelemente 11 und einen aus zwei Stirnplatten 13 und vier Rahmenstäben 14 aufgebauten Modulrahmen.

Die Flachfilterelemente 11 enthalten eine Drainageschicht, die zwischen zwei äußeren Filtrationsmembranen eingeschlossen und beidseitig mit den Filtrationsmembranen flächig haftend verbunden ist. Die Drainageschicht besteht zweckmäßigerweise aus einem oder mehreren Geweben aus Garnen, Filamenten oder Drähten aus Polymeren und/oder Metallen, einem oder mehreren Vliesen aus Polymeren, oder aus einer Kombination dieser Gewebe und Vliese. Vorzugweise ist die Drainageschicht als Abstandsgewirke ausgebildet.

Die Filtrationsmembranen können mit der Drainageschicht vollflächig, punktuell oder linienförmig durch Applikation eines Reaktiv- oder Heißklebers verbunden sein.

Thermisches Schweißen sowie Ultraschallschweißen sind ebenfalls geeignete Verfahren um einen solchen Verbund herzustellen. An den Rändern sind die Flachfilterelemente 11 druckdicht versiegelt, um ein Eindringen von Rohflüssigkeit zu verhindern.

Die Filtrationsmembranen der Flachfilterelemente 11 bestehen bevorzugt aus Polyethersulfon, Polysulfon, Polyacrylnitril, Polyvinylidenfluorid, Polyamid, Polyetherimid, Celluloseacetat, Regeneratcellulose, Polyolefinen, Fluorpolymeren und können beispielsweise hergestellt werden, indem man Vliese oder Gewebe mit Polymerlösung beschichtet und die Poren in einem nachfolgenden Phaseninversionsschritt erzeugt oder indem Polymerfolien in geeigneter Weise verstreckt werden, so dass die gewünschten Poren entstehen. Viele dieser Filtrationsmembranen sind kommerziell erhältlich z. B. unter der Bezeichnung NADIR® Membranen (NADIR Filtration GmbH, Wiesbaden) oder Celgard® Flat Sheet Membranes (Celgard Inc., Charlotte, NC, USA).

Vorzugsweise haben die Flachfilterlemente 11 und die Stirnplatten 13 eine rechteckige Form. In alternativen Ausgestaltungen der Erfindung können die Flachfilterelemente und die Stirnplatten 13 eine quadratische, sechseckige, runde, ovale oder andere geometrische Form aufweisen.

In einer besonders bevorzugten Ausführungsform der Erfindung sind die Stirnplatten 13 aus einem polymeren Leichtbauwerkstoff gefertigt. Bei dem polymeren Leichtbauwerkstoff handelt es sich um einen zellularen Verbundwerkstoff, der z.B. eine Wabenstruktur (Honeycomb) umfasst, oder um einen Faser-Verbundwerkstoff. Des Weiteren wird erfindungsgemäß polymerer Leichtbauwerkstoff mit einer Hohlkammerstruktur eingesetzt.

Die Flachfilterelemente 11 weisen vier flüssigkeitsdichte, nahe den Ecken der Flachfilterelemente 11 angeordnete Halteöffnungen auf, durch welche vier Haltesstäbe 15 geführt sind. Die Haltestäbe 15 sind an ihren beiden Enden jeweils mit einem (nicht gezeigtem) Gewinde ausgestattet. Zwischen benachbarten Flachfilterelementen 11 sind jeweils vier rohrförmige Abstandshalter 27 angeordnet, welche die Haltestäbe 15 umschließen. Die Länge der Haltestäbe 15 ist größer als die Dicke des von den Flachfilterelementen 11 und den Abstandshaltern gebildeten Stapels, wobei die mit Gewinden ausgestatteten Enden der Haltestäbe 15 aus den Stirnplatten 13 herausragen. Mit Hilfe von auf den endseitigen Gewinden der Haltestäbe 15 aufgeschraubten Muttern (nicht gezeigt) wird der aus den Flachfilterelementen 11 gebildete Stapel auf den Haltestäben 15 fixiert.

Zur Halterung der Flachfilterelemente 11 im Modulrahmen sind die Haltestäbe 15 mittels Aufhängungen an den Rahmenstäben 14 befestigt. Vorzugsweise werden als Aufhängungen Stahlfedern 28 eingesetzt. Die Stahlfedern sind nahe den Ecken des aus den Flachfilterelementen 11 gebildeten Stapels, insbesondere zwischen den endseitigen und den hierzu benachbarten Flachfilterelementen angeordnet.

Zur Ableitung von Permeat sind die Flachfilterelemente 11 über Permeatöffnungen und zwischen benachbarten Flachfilterelementen 11 angeordneten rohrartigen Permeatleitungen untereinander verbunden. Zudem ist das erste Flachfilterelement 11 im Stapel über eine weitere Permeatleitung mit einer Permeatdurchführung in der benachbarten Stirnplatte 13 verbunden. Auf der nach außen gewandten, den Flachfilterelementen 11 gegenüberliegenden Seite der Stirnplatte 13 ist die Permeatdurchführung mit einer Ablaufleitung 12 verbunden. Die Form der Permeatöffnungen und -leitungen ist derart gestaltet, dass die Permeatleitungen eine große innere Querschnittsfläche bei zugleich niedrigem Strömungswiderstand für die an ihrer Außenseite strömende Rohflüssigkeit aufweisen. In der in Fig. 1 dargestellten Ausführungsform haben die Permeatleitungen z.B. einen Rohrquerschnitt in Form eines vertikal verlaufenden, länglichen aus einem Rechteck und zwei stirnseitigen Abrundungen zusammengesetzten Ovals.

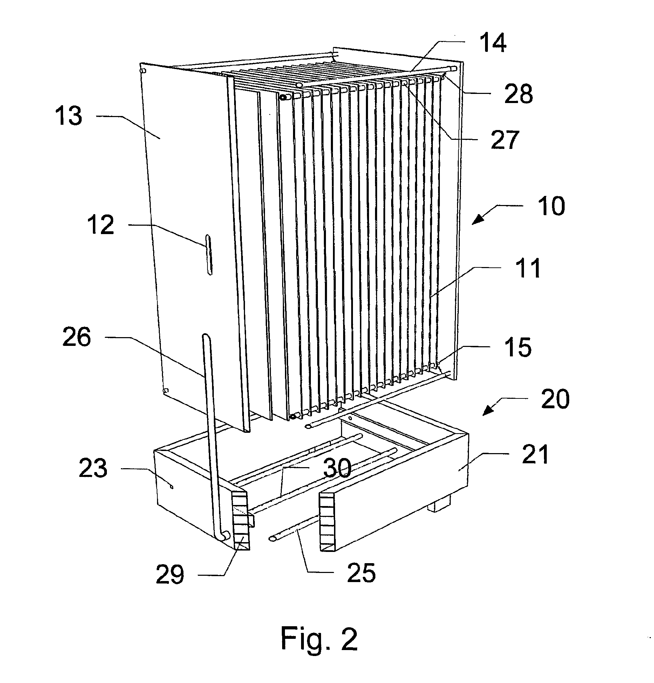

Wie aus Fig. 2 ersichtlich, umfasst das Untersatzgehäuse 20 eine Wandung aus vier Gehäusewänden 21 aus einem polymeren Leichtbaumaterial, Gehäusefüße 24, zwei bis vier Auflagestege 22, Belüftungsrohre 25 und eine Druckluftzuleitung 26, welche mit den Belüftungsrohren 25 verbunden ist. Die Auflagestege 22 dienen zur Abstützung bzw. Halterung des Flachfiltermoduls 10 im Untersatzgehäuse 20, wobei die Stirnplatten 13 auf den Auflagestegen 22 aufsitzen. Die Auflagestege 22 sind mittels Befestigungsmitteln 23, z.B. Bolzen, Schrauben und dergleichen an den Gehäusewänden 21 befestigt. Die Belüftungsrohre 25 weisen Auslassdüsen 30 auf.

Bei dem Untersatzgehäuse 20 können die Gehäusefüße auch weggelassen werden, so dass die Wandung direkt auf dem Boden oder einer Unterlage aufsitzt. Die Auflagestege 22 können auch durch Ultra- oder Thermoschweißen mit den Gehäusewänden 21 verbunden werden. Die Auflagestege 22 sind aus dem gleichen polymeren Material wie die Gehäusewände 21 gefertigt, können jedoch auch aus dazu unterschiedlichem Material bestehen.

Vorzugsweise bestehen die Gehäusewände 21 aus polymeren Hohlkammerplatten. Hohlkammerplatten aus thermoplastischen Polymeren wie Polypropylen oder Polyethylen werden in industriellem Maßstab hergestellt und als Halbzeuge in einer Vielzahl von Varianten kommerziell angeboten. Diese Hohlkammerplatten werden z.B. mittels Extrusion oder durch spezielle thermische Fügemethoden gefertigt.

In einer weiteren Ausgestaltung der Erfindung können bis zu drei Gehäusewände 21 aus polymeren Vollmaterialplatten bestehen und nur ein einzige Gehäusewand 21 aus einer polymeren Hohlkammerplatte gefertigt sein. Des Weiteren sind Ausführungsformen geeignet, bei denen zwei Gehäusewände 21 Vollmaterialplatten und zwei Gehäusewände Hohlkammerplatten oder drei Gehäusewände 21 Hohlkammerplatten und eine Gehäusewand 21 eine Vollmaterialplatte sind.

Erfindungsgemäß sind Hohlkammerplatten bevorzugt, die voneinander gasdicht getrennte Hohlkammern 29 aufweisen. Durch passgenauen Zuschnitt und Fügung der Gehäusewände 21 aus derartigen Hohlkammerplatten bilden die Hohlkammern 29 ein System von innerhalb der Gehäusewände 21 verlaufenden Ringleitungen. Über eine oder auch mehrere dieser Ringleitungen ist die Druckluftzuleitung 26 mit den Belüftungsrohren 25 verbunden.

Im Folgenden wird der Begriff "Filtrationsdichte" verwendet, um das Verhältnis von Filtrationsfläche zum Eigengewicht der Filtrationsvorrichtung in trockenem Zustand zu bezeichnen. Die erfindungsgemäße Filtrationsvorrichtung weist eine Filtrationsdichte von 5 bis 10 m²/kg, bevorzugt 10 bis 15 m²/kg und besonders bevorzugt 15 bis 20 m²/kg auf.

Vorzugsweise hat das Untersatzgehäuse eine Tragfähigkeit von größer 200 kg, bevorzugt größer 500 kg und besonders bevorzugt größer 1000 kg.

Gemäß der Erfindung handelt es sich bei dem polymeren Leichtbauwerkstoff, aus dem die Wandung des Untersatzgehäuses besteht, um einen zellularen Verbundwerkstoff. Der zellulare Verbundwerkstoff ist ein oder mehrlagig aufgebaut, wobei mindestens eine Lage eine zellulare Struktur aufweist. Der Begriff "zellulare Struktur" bezeichnet ein Material mit einer Vielzahl von Hohlräumen (Zellen), die von Stegen und/oder Wänden umgeben sind. Die Stege und Wände können regelmäßig nach Art eines periodischen Raumgitters angeordnet sein oder völlig unregelmäßig verlaufen. Die Hohlräume können miteinander verbunden oder durch geschlossene Wände gänzlich voneinander separiert sein. Vorzugsweise umfaßt der zellulare Verbundwerkstoff eine Wabenstruktur z.B. mit regelmäßig angeordneten hexagonalen Hohlräumen in Form von Honigwaben.

In einer anderen Ausführungsform der Erfindung handelt es sich bei dem polymeren Leichtbauwerkstoff um einen Faser-Verbundwerkstoff aus einem Matrixpolymer, das Verstärkungsfasern natürlicher oder synthetischer Herkunft, wie z.B. Kohlenstofffasern enthält. Die Verstärkungsfasern werden während der Herstellung des Faser-Verbundwerkstoffs einer Schmelze des Matrixpolymers beigefügt.

Vorzugsweise umfaßt der polymere Leichtbauwerkstoff eine Hohlkammerstruktur. Erfindungsgemäß zeichnet sich die Wandung des Untersatzgehäuses durch folgende Eigenschaften aus:

| **Eigenschaft/Messmethode** | **Dimension** | **Wert** | |
|---|---|---|---|
| Raumgewicht | kg/m³ | | ≤ 350 |
| | | bevorzugt: | ≤ 300 |
| | | besonders bevorzugt: | ≤ 250 |
| Dicke * | cm | | 0,5 bis 20 |
| | | bevorzugt: | 1 bis 10 |
| | | besonders bevorzugt: | 2 bis 8 |
| | MPa | | ≥ 1 |
| Mechanische Druckfestigkeit*/ DIN 53 421 | | bevorzugt: | ≥ 2 |
| | | besonders bevorzugt: | ≥ 3 |
| | MPa | | ≥ 60 |
| Kompressionsmodul*/ DIN 53 421 | | bevorzugt: | ≥ 100 |
| | | besonders bevorzugt: | ≥ 200 |
| Schubfestigkeit*/ DIN 53 294 | Mpa | | ≥ 0,5 |
| | | bevorzugt: | ≥ 1 |
| | | besonders bevorzugt: | ≥ 2 |
| Schubmodul*/ DIN 53 294 | Mpa | | ≥ 10 |
| | | bevorzugt: | ≥ 15 |
| | | besonders bevorzugt: | ≥ 20 |

| | | | |
|---|---|---|---|
| *gemessen in Richtung senkrecht zur Oberfläche der Wandung | | | |

In Weiterbildung der Erfindung ist das Untersatzgehäuse mit einer Belüftungsvorrichtung für eine Mammutpumpe ausgerüstet. Die Belüftungsvorrichtung umfaßteine Druckluftzuleitung und Belüftungsrohre mit Auslassdüsen, wobei die Belüftungsrohre vorzugsweise über eine der Hohlkammern 29 in der Wandung des Untersatzgehäuses mit der Druckluftzuleitung verbunden sind.

In einer weiteren Ausgestaltung sind die Belüftungsrohre 25 direkt mit der Druckluftzuleitung 26 der Belüftungsvorrichtung in der Weise verbunden, dass die Druckzuluftleitung durch eine der Gehäusewände 21 des Untersatzgehäuses 20 abgedichtet hindurchgeführt und an die Belüftungsrohre 25 angeschlossen ist.

Neben einer hohen Filtrationsdichte zeichnet sich die erfindungsgemäße Filtrationsvorrichtung durch einen geringen Strömungswiderstand aus. Die Anzahl und Größe von Flächen oder Strukturen, an denen sich grobe Verunreinigungen der Rohflüssigkeit wie z. B. Haare und Fasern häufig verfangen, ist gering. Die mehrseitig offene Bauweise der erfindungsgemäßen Filtrationsvorrichtung erleichtert zudem die mechanische Reinigung der Membranoberflächen, da sie es gestattet, Reinigungsgeräte oder einen Wasserstrahl im wesentlichen von allen Seiten in den Spalt zwischen benachbarten Flachfilterelementen einzubringen. Als Reinigungsgeräte kommen z. B. Rund- oder Flachbürsten in Frage, deren Abmessung in einer Dimension kleiner/gleich dem Spalt zwischen benachbarten Flachfilterelementen ist. Das einzelne Flachfilterelement 11 kann auf diese Weise gründlich gereinigt werden, da es nach dem Abheben des Filtrationsmoduls 10 von dem Untersatzgehäuse 20 von allen Seiten, insbesondere an der Unterseite, zugänglich ist.

Da in einem Flachfiltermodul 10 bis zu 25 Flachfilterelemente 11 untergebracht sind, wobei das einzelne Flachfilterelement 11 eine Fläche von 1 bis 4 m² hat, ergibt sich eine kompakte Bauweise.

## Patentansprüche

1. Filtrationsvorrichtung für Mikro-, Ultra- und Nanofiltration für Kläranlagen, umfassend ein Flachfiltermodul (10) und ein Untersatzgehäuse (20) zur Halterung des Flachfiltermoduls (10) mit einer Wandung (21) aus einem polymeren zellularen Leichtbauwerkstoff oder einem Faser-Verbundwerkstoff.

2. Filtrationsvorrichtung nach Anspruch 1, **dadurch gekennzeichnet, dass** der polymere Leichtbauwerkstoff ein zellularer Verbundwerkstoff ist, der vorzugsweise eine Wabenstruktur (Honeycomb) aufweist.

3. Filtrationsvorrichtung nach Anspruch 1, **dadurch gekennzeichnet, dass** der Faser-Verbundwerkstoff aus einem Matrixpolymer besteht, das natürliche oder synthetische Verstärkungsfasern enthält.

4. Filtrationsvorrichtung nach Anspruch 1, **dadurch gekennzeichnet, dass** der polymere Leichtbauwerkstoff eine Hohlkammerstruktur mit voneinander gasdicht getrennten Hohlkammern (29) aufweist.

5. Filtrationsvorrichtung nach Anspruch 1, **dadurch gekennzeichnet, dass** die Wandung (21) vier Gehäusewände umfasst, von denen zumindest eine Gehäusewand eine polymere Hohlkammerstruktur besitzt, während die übrigen Gehäusewände aus polymerem Vollmaterial bestehen.

6. Filtrationsvorrichtung nach Anspruch 5, **dadurch gekennzeichnet, dass** zwei Gehäusewände eine polymere Hohlkammerstruktur aufweisen und zwei Gehäusewände aus polymerem Vollmaterial gefertigt sind oder dass drei Gehäusewände eine polymere Hohlkammerstruktur aufweisen und eine Gehäusewand aus polymerem Vollmaterial besteht.

7. Filtrationsvorrichtung nach Anspruch 1, **dadurch gekennzeichnet, dass** die Wandung (21) des Untersatzgehäuses (20) ein Raumgewicht von kleiner 350 kg/m³, bevorzugt kleiner 300 kg/m³ und besonders bevorzugt kleiner 250 kg/m³ aufweist.

8. Filtrationsvorrichtung nach Anspruch 1, **dadurch gekennzeichnet, dass** die Wandung (21) des Untersatzgehäuses (20) eine Dicke von 0,5 bis 20 cm, bevorzugt 1 bis 10 cm und besonders bevorzugt 2 bis 8 cm aufweist.

9. Filtrationsvorrichtung nach Anspruch 1, **dadurch gekennzeichnet, dass** die Wandung (21) des Untersatzgehäuses (20) eine mechanische Druckfestigkeit von größer 1 MPa, bevorzugt größer 2 MPa und besonders bevorzugt größer 3 MPa, gemessen senkrecht zur Oberfläche der Wandung gemäß DIN 53 421, aufweist.

10. Filtrationsvorrichtung nach Anspruch 1, **dadurch gekennzeichnet, dass** die Wandung (21) des Untersatzgehäuses (20) einen Kompressionsmodul von größer 60 MPa, bevorzugt größer 100 MPa und besonders bevorzugt größer 200 MPa, gemessen senkrecht zur Oberfläche der Wandung gemäß DIN 53 421, aufweist.

11. Filtrationsvorrichtung nach Anspruch 1, **dadurch gekennzeichnet, dass** die Wandung (21) des Untersatzgehäuses (20) eine Schubfestigkeit von größer 0,5 MPa, bevorzugt größer 1 MPa und besonders bevorzugt größer 2 MPa, gemessen senkrecht zur Oberfläche der Wandung gemäß DIN 53 294, aufweist.

12. Filtrationsvorrichtung nach Anspruch 1, **dadurch gekennzeichnet, dass** die Wandung (21) des Untersatzgehäuses (20) einen Schubmodul von größer 10 MPa, bevorzugt größer 15 MPa und besonders bevorzugt größer 20 MPa, gemessen senkrecht zur Oberfläche der Wandung gemäß DIN 53 294, aufweist.

13. Filtrationsvorrichtung nach Anspruch 1, **dadurch gekennzeichnet, dass** das Untersatzgehäuse (20) mit einer eine Druckluftzuleitung (26) und Belüftungsrohre (25) mit Auslassdüsen (30) umfassenden Belüftungsvorrichtung für eine Mammutpumpe ausgerüstet ist, wobei vorzugsweise die Druckluftzuleitung (26) durch eine Gehäusewand der Wandung (21) dichtend hindurchgeführt und mit den Belüftungsrohren (25) direkt verbunden ist.

14. Filtrationsvorrichtung nach Anspruch 4, **dadurch gekennzeichnet, dass** das Untersatzgehäuse (20) mit einer eine Druckluftzuleitung (26) und Belüftungsrohre (25) mit Auslassdüsen (30) umfassenden Belüftungsvorrichtung für eine Mammutpumpe ausgerüstet ist, wobei die Belüftungsrohre (25) über eine oder mehrere Hohlkammern (29) in der Wandung (21) des Untersatzgehäuses (20) mit der Druckluftzuleitung (26) verbunden sind.

15. Filtrationsvorrichtung nach Anspruch 1, **dadurch gekennzeichnet, dass** das Verhältnis von Filtrationsfläche zum Gewicht der Filtrationsvorrichtung 5 bis 10 m²/kg, bevorzugt 10 bis 15 m²/kg und besonders bevorzugt 15 bis 20 m²/kg beträgt.

16. Filtrationsvorrichtung nach Anspruch 1, **dadurch gekennzeichnet, dass** das Untersatzgehäuse (20) eine Tragfähigkeit von größer 200 kg, bevorzugt größer 500 kg und besonders bevorzugt größer 1000 kg aufweist.

17. Filtrationsvorrichtung nach Anspruch 1, **dadurch gekennzeichnet, dass** das Untersatzgehäuse (20) mit oder ohne Gehäusefüße (24) ausgerüstet ist und dass die Innenseiten der Gehäusewände Auflagestege (22) zur Abstützung eines Flachfiltermoduls (10) aufweisen.

## Claims

1. A filtration arrangement for micro, ultra and nano filtration in sewage treatment plants, comprising a flat filter module (10) and a pedestal housing (20) for holding the flat filter module (10) with a walling (21) consisting of a polymeric cellular lightweight construction material or of a composite fiber material.

2. The filtration arrangement as claimed in claim 1, wherein the polymeric lightweight construction material is a cellular composite material which preferably has a honeycomb structure.

3. The filtration arrangement as claimed in claim 1, wherein the composite fiber material is composed of a matrix polymer which contains natural or synthetic reinforcing fibers.

4. The filtration arrangement as claimed in claim 1, wherein the polymeric lightweight construction material has a hollow-chamber structure with hollow chambers (29) separated, gas-tight, from one another.

5. The filtration arrangement as claimed in claim 1, wherein the walling (21) comprises four housing walls, of which at least one housing wall possesses a polymeric hollow-chamber structure, while the other housing walls consist of polymeric solid material.

6. The filtration arrangement as claimed in claim 5, wherein two housing walls have a polymeric hollow-chamber structure and two housing walls are manufactured from polymeric solid material or wherein three housing walls have a polymeric hollow-chamber structure and one housing wall consists of polymeric solid material.

7. The filtration arrangement as claimed in claim 1, wherein the walling (21) of the pedestal housing (20) has a weight unit volume of lower than 350 kg/m³, preferably of lower than 300 kg/m³, and especially preferably of lower than 250 kg/m³.

8. The filtration arrangement as claimed in claim 1, wherein the walling (21) of the pedestal housing (20) has a thickness of 0.5 to 20 cm, preferably of 1 to 10 cm, and especially preferably of 2 to 8 cm.

9. The filtration arrangement as claimed in claim 1, wherein the walling (21) of the pedestal housing (20) has a mechanical compressive strength of higher than 1 MPa, preferably of higher than 2 MPa, and especially preferably of higher than 3 MPa, measured perpendicularly to the surface of the walling according to DIN 53 421.

10. The filtration arrangement as claimed in claim 1, wherein the walling (21) of the pedestal housing (20) has a bulk modulus of higher than 60 MPa, preferably of higher than 100 MPa, and especially preferably of higher than 200 MPa, measured perpendicularly to the surface of the walling according to DIN 53 421.

11. The filtration arrangement as claimed in claim 1, wherein the walling (21) of the pedestal housing (20) has a shear strength of higher than 0.5 MPa, preferably of higher than 1 MPa, and especially preferably of higher than 2 MPa, measured perpendicularly to the surface of the walling according to DIN 53 294.

12. The filtration arrangement as claimed in claim 1, wherein the walling (21) of the pedestal housing (20) has a shear modulus of higher than 10 MPa, preferably of higher than 15 MPa, and especially preferably of higher than 20 MPa, measured perpendicularly to the surface of the walling according to DIN 53 294.

13. The filtration arrangement as claimed in claim 1, wherein the pedestal housing (20) is equipped with a ventilation device, which comprises a compressed-air feed line (26) and ventilation pipes (25) with outlet nozzles (30), for a mammoth pump, the compressed-air feed line (26) preferably being led sealingly through a housing wall of the walling (21) and being connected directly to the ventilation pipes (25).

14. The filtration arrangement as claimed in claim 4, wherein the pedestal housing (20) is equipped with a ventilation device, which comprises a compressed-air feed line (26) and ventilation pipes (25) with outlet nozzles (30), for a mammoth pump, the ventilation pipes (25) being connected to the compressed-air feed line (26) via one or a plurality of hollow chamber(s) (29) in the walling (21) of the pedestal housing (20).

15. The filtration arrangement as claimed in claim 1, wherein the ratio of the filtration area to the weight of the filtration arrangement amounts to 5 to 10 m²/kg, preferably 10 to 15 m²/kg and especially preferably 15 to 20 m²/kg.

16. The filtration arrangement as claimed in claim 1, wherein the pedestal housing (20) has a load-bearing capacity of higher than 200 kg, preferably of higher than 500 kg and especially preferably of higher than 1000 kg.

17. The filtration arrangement as claimed in claim 1, wherein the pedestal housing (20) is equipped with or without housing feet (24), and wherein the insides of the housing walls have bearing webs (22) for supporting a flat filter module (10).

## Revendications

1. Dispositif de filtration pour microfiltration, ultrafiltration et nanofiltration pour stations d'épuration, comprenant un module de filtre plat (10) et un boîtier de base (20) destiné à supporter le module de filtre plat (10), pourvu d'une paroi (21) en matériau léger cellulaire polymère ou en matériau composite renforcé par des fibres.

2. Dispositif de filtration selon la revendication 1, **caractérisé en ce que** le matériau léger polymère est un matériau cellulaire qui présente de préférence une structure en nids d'abeilles (honeycomb).

3. Dispositif de filtration selon la revendication 1, **caractérisé en ce que** le matériau composite renforcé par des fibres est constitué d'un polymère matriciel qui contient des fibres de renfoncement naturelles ou synthétiques.

4. Dispositif de filtration selon la revendication 1, **caractérisé en ce que** le matériau léger polymère présente une structure à chambres creuses comprenant des chambres creuses (29) séparées de manière étanche au gaz les unes des autres.

5. Dispositif de filtration selon la revendication 1, **caractérisé en ce que** la paroi (21) comprend quatre pans de boîtier dont au moins un pan de boîtier a une structure à chambres creuses polymère tandis que les autres pans de boîtier sont constitués de matériau plein polymère.

6. Dispositif de filtration selon la revendication 5, **caractérisé en ce que** deux pans de boîtier présentent une structure à chambres creuses polymère et deux pans de boîtier sont fabriqués en matériau plein polymère ou **en ce que** trois pans de boîtier présentent une structure à chambres creuses polymère et un pan de boîtier est constitué de matériau plein polymère.

7. Dispositif de filtration selon la revendication 1, **caractérisé en ce que** la paroi (21) du boîtier de base (20) présente un poids spécifique inférieur à 350 kg/m³, de préférence inférieur à 300 kg/m³ et mieux encore inférieur à 250 kg/m³.

8. Dispositif de filtration selon la revendication 1, **caractérisé en ce que** la paroi (21) du boîtier de base (20) présente une épaisseur de 0,5 à 20 cm, de préférence de 1 à 10 cm et mieux encore de 2 à 8 cm.

9. Dispositif de filtration selon la revendication 1, **caractérisé en ce que** la paroi (21) du boîtier de base (20) présente une résistance à la compression mécanique supérieure à 1 MPa, de préférence supérieure à 2 MPa et mieux encore supérieure à 3 MPa, mesurée perpendiculairement à la surface de la paroi selon DIN 53 421.

10. Dispositif de filtration selon la revendication 1, **caractérisé en ce que** la paroi (21) du boîtier de base (20) présente un module de compression supérieur à 60 MPa, de préférence supérieur à 100 MPa et mieux encore supérieur à 200 MPa, mesuré perpendiculairement à la surface de la paroi selon DIN 53 421.

11. Dispositif de filtration selon la revendication 1, **caractérisé en ce que** la paroi (21) du boîtier de base (20) présente une résistance au cisaillement supérieure à 0,5 MPa, de préférence supérieure à 1 MPa et mieux encore supérieure à 2 MPa, mesurée perpendiculairement à la surface de la paroi selon DIN 53 421.

12. Dispositif de filtration selon la revendication 1, **caractérisé en ce que** la paroi (21) du boîtier de base (20) présente un module de cisaillement supérieur à 10 MPa, de préférence supérieur à 15 MPa et mieux encore supérieur à 20 MPa, mesuré perpendiculairement à la surface de la paroi selon DIN 53 421.

13. Dispositif de filtration selon la revendication 1, **caractérisé en ce que** le boîtier de base (20) est équipé d'un dispositif de ventilation comprenant une conduite d'alimentation en air comprimé (26) et des tuyaux de ventilation (25) avec des buses de sortie (30) pour une pompe mammouth, la conduite d'alimentation en air comprimé (26) traversant de manière étanche un pan de boîtier de la paroi (21) et est directement reliée aux tuyaux de ventilation (25).

14. Dispositif de filtration selon la revendication 4, **caractérisé en ce que** le boîtier de base (20) est équipé d'un dispositif de ventilation comprenant une conduite d'alimentation en air comprimé (26) et des tuyaux de ventilation (25) avec des buses de sortie (30) pour une pompe mammouth, les tuyaux de ventilation (25) étant reliés à la conduite d'alimentation en air comprimé (26) par l'intermédiaire d'une ou plusieurs chambres creuses (29) dans la paroi (21) du boîtier de base (20).

15. Dispositif de filtration selon la revendication 1, **caractérisé en ce que** le rapport de la surface de filtration au poids du dispositif de filtration est de 5 à 10 m²/kg, de préférence de 10 à 15 m²/kg et mieux encore de 15 à 20 m²/kg.

16. Dispositif de filtration selon la revendication 1, **caractérisé en ce que** le boîtier de base (20) présente une force portante supérieure à 200 kg, de préférence supérieure à 500 kg et mieux encore supérieure à 1000 kg.

17. Dispositif de filtration selon la revendication 1, **caractérisé en ce que** le boîtier de base (20) est équipé ou non de pieds (24) de boîtier et **en ce que** les côtés intérieurs des pans de boîtier présente des entretoises d'appui (22) pour supporter un module de filtre plat (10)
